# EUROPEAN PATENT APPLICATION

(11) **EP 2 196 560 A2**
(43) Date of publication of application: **16.06.2010**
(21) Application number: 09177793.8
(22) Date of filing: 02.12.2009
(51) Int. Cl.: C23F 1/28, C23F 1/44, F01D 25/00, B22D 27/04, B22D 31/00

(54) **Methods of manufacturing casted articles, and systems**

(30) Priority: 15.12.2008 US 334582; 30.06.2009 US 494727
(71) Applicant: General Electric Company, Schenectady, NY 12345 (US)
(72) Inventor: Kool, Lawrence Bernard, Clifton Park, NY 12065 (US); Huang, Shyh-Chin, Latham, NY 12110 (US); Gigliotti, jr., Michael Francis Xavier, Scotia, NY 12302 (US); Surman, Cheryl Margaret, Albany, NY 12203 (US); Leach, Andrew Michael, Clifton Park, NY 12065 (US); Elliott, Andrew J., Westminster, SC 29693 (US)
(74) Representative: Szary, Anne Catherine

(57) **Abstract**

A method (10) for manufacturing a casted article (62) is presented. The method (10) includes steps of forming a casted article (62) by a liquid metal cooled directional solidification process (12), removing a metallic material (66) from a surface (64) of the casted article (62), (24) and inspecting the surface (64) of the casted article (62), (26). The surface (64) of the casted article (62) is inspected for the presence of the metallic material (66) by exposing the surface (64) to a visualization reagent (110). A system (60) for manufacturing the casted article (62) is also presented.

## Description

### BACKGROUND OF THE INVENTION

The invention relates generally to casted articles, and more specifically to cleaning the casted articles, for example, turbine engine components.

Liquid metal cooling is often used to form high-gradient castings of superalloy components in advanced gas turbines, as well as other industrial parts. During the cooling process, some of the molten metal used to cool the casting can breach the casting container and be deposited as a contaminant on the surface of the casted article. The casted article is typically subjected to a series of thermal fabrication and heat treatment cycles before becoming a useful casted article. The metal contaminant, if present, can diffuse below the surface of the casted item during the thermal processing cycles, and precipitously affect the surface quality and bulk properties of the finished article.

Accordingly, there is a need for methods of effectively removing such metallic contaminants. It would also be desirable if the processes did not result in the formation of an unacceptable amount of hazardous fumes. The processes should also exhibit some degree of selectivity. For example, the process should effectively remove the metallic contaminant while substantially preserving the casted article.

### BRIEF DESCRIPTION

Embodiments of the invention are directed towards a method for manufacturing a casted article.

According to one embodiment of the invention, a method for manufacturing a casted article is disclosed. The method includes steps of forming a casted article by a liquid metal cooled directional solidification process, removing a metallic material from a surface of the casted article and inspecting the surface of the casted article. The surface of the casted article is inspected for the presence of the metallic material by exposing the surface to a visualization reagent.

In another embodiment, a method comprises filing a mold with a molten metal and immersing the mold into a cooling metallic liquid progressively to cause a solidification interface to pass through the molten metal. The method further includes recovering a casted article from the mold and removing a metallic material from a surface of the casted article. Furthermore, the method includes inspecting for the presence of the metallic material on the surface of the casted article by exposing the surface to a visualization reagent.

Another embodiment of the invention is a system, comprising a heating furnace at a temperature above the liquidus temperature of a metal within a mold, a liquid cooling bath comprising a cooling metallic liquid and a bath having an aqueous composition. The aqueous composition removes a metallic material from a surface of a casted article. The system further includes a unit to expose at least a portion of the casted article to a visualization reagent, and a visualization aid for observing a response of the visualization reagent.

### DRAWINGS

These and other features, aspects, and advantages of the present invention will become better understood when the following detailed description is read with reference to the accompanying drawings in which like characters represent like parts throughout the drawings, wherein:
FIG. 1 is a flow diagram depicting a method of making a casted article in accordance with an embodiment of the invention.
FIG. 2 is a schematic view of a system (furnace) for casting process in accordance with an embodiment of the invention.
FIG. 3 is a schematic view of a cleaning bath as recited in the method shown in FIG. 1, in accordance with an embodiment of the invention.
FIG. 4 is a flow chart depicting a method of inspecting (testing) a surface of a casted article in accordance with an embodiment of the invention.
FIG. 5 is a schematic view of the inspection method as recited in FIG. 3, in accordance with an embodiment of the invention

### DETAILED DESCRIPTION

Approximating language, as used herein throughout the specification and claims, may be applied to modify any quantitative representation that could permissibly vary without resulting in a change in the basic function to which it is related. Accordingly, a value modified by a term or terms, such as "about," is not limited to the precise value specified. In some instances, the approximating language may correspond to the precision of an instrument for measuring the value.

In the following specification and the claims that follow, the singular forms "a", "an" and "the" include plural referents unless the context clearly dictates otherwise.

As used herein, the term "superalloy" refers to a nickel, cobalt or iron-based heat resistant alloy that has superior strength and oxidation resistance at high temperatures. Nickel and cobalt-based alloys are favored for high-performance applications. The superalloy can contain chromium to impart surface stability and one or more minor constituents such as molybdenum, tungsten, titanium, iron or aluminum for strengthening purposes. Physical properties of the superalloy make the superalloy particularly useful for manufacturing a gas turbine component.

During a representative casting process, a casted article gets contaminated by the deposition of metal contaminants on the suface of the casted article. Various methods or techniques can be used to strip the deposited metal contaminant from the surface of the casted article. Even after effective cleaning or striping processes, there is a possibility of some residual metal contaminants to be present on the surface. As fully cleaned articles or components are desired, it is necessary to determine if the surface of the article is cleaned or still contains the metal contaminants. To ensure quality of the surface of the casted article, an inspection test of the surface is performed to detect the presence of any metal contaminants on the surface, according to an embodiment of the present invention. A visualization reagent can be used for the detection of the residual metal present on the surface. The response of the visualization reagent indicates the presence or absence of any metal contaminant on the surface. The testing of the surface, in this way, further assures the effectiveness of the cleaning process used.

As used herein, the term "visualization reagent" refers to a chemical reagent that gives an optical response on reacting with a metallic material. The optical response of the chemical reagent can typically be observed in the visible region of the electromagnetic radiation.

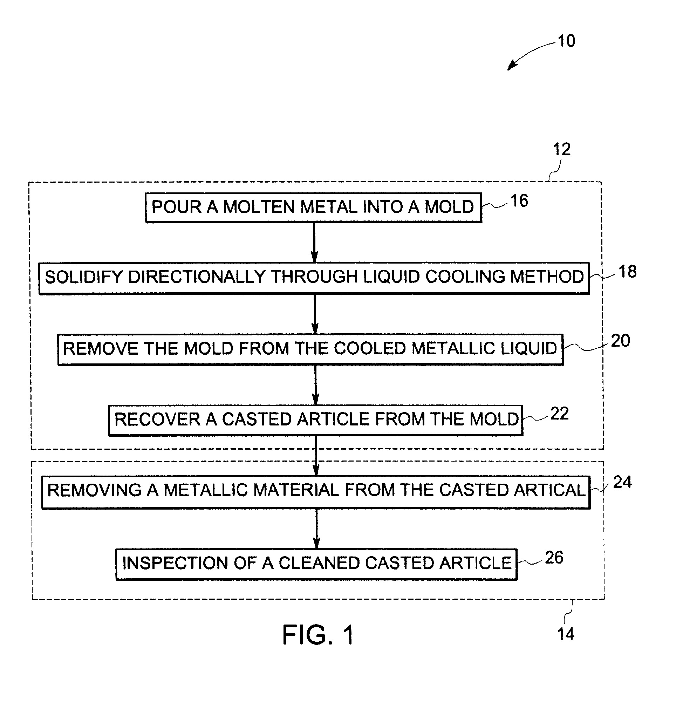

According to an embodiment of the invention, a method of making a casted article is described with the help of a flow diagram 10 as illustrated in FIG 1. The method involves steps 12 and 14 of manufacturing and cleaning of the casted article, respectively. The manufacturing method 12 includes pouring a molten metal into a mold as indicated by step 16 and solidifying the molten metal directionally through a liquid cooling method as indicated by step 18. Step 20 of the manufacturing method involves removing the mold from a cooled liquid metal. At step 22, a casted article is recovered from the mold. The method further involves step 14 for cleaning of the casted article. The cleaning of a contaminated surface includes steps of removing the metallic material or the metal contaminant from the surface as indicated by step 24 followed by inspecting the surface for the presence of any residual metallic material as indicated by step 26.

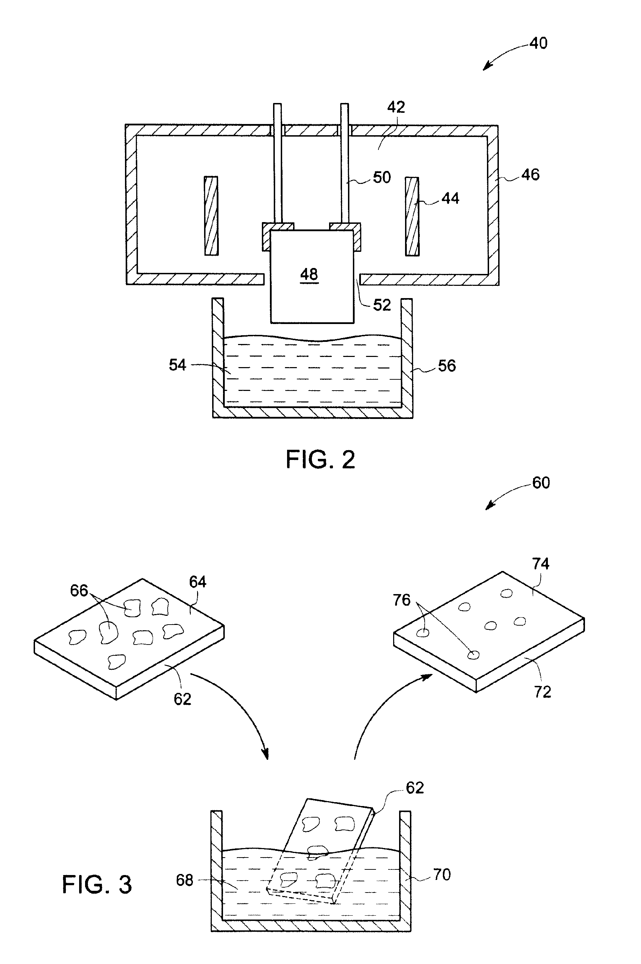

Referring now to FIG. 2, a directional solidification furnace 40 is illustrated, in one embodiment, for manufacturing a casted article by the method 10 as described in FIG 1. The directional solidification furnace 40 includes a heating furnace 42 and a liquid metal cooling bath 54. The heating furnace 42 is heated, for example, by resistive heating using graphite strips 44 within an insulated furnace box 46. A ceramic mold 48 is located within the furnace box 46 by a mold positioner 50. The mold 48 is filled with a molten metal 49 to be casted. The heating furnace 42 is heated to a sufficiently high temperature to ensure that the metal 49 in the mold 48 is melted (that is to a temperature above the liquidus temperature of the metal 49). Directional solidification is achieved by lowering the mold 48 containing the molten metal 49 out of the heated furnace box 46 into the liquid metal cooling bath 54 through an aperture 52 in the furnace box 46 and solidification progresses from bottom to top within the mold 48. The heating furnace 42 heats the metal alloy and the liquid cooling bath 54 removes heat from the metal alloy during a casting process and forms a casted article. The liquid coolant bath 54 includes a cooling metallic liquid contained in a crucible 56 of a metal or a refractory material.

The casted article may include a metal, or a metal alloy. In one embodiment, the casted article includes iron, cobalt, nickel, aluminum, chromium, titanium, and mixtures or alloys, for example, stainless steel. In a preferred embodiment, the casted article includes a superalloy.

The mold 48 is chosen according to the desired shape of the casted article and may differ from the shape as shown in FIG. 1. The casted article can be of many shapes. As described herein, in one embodiment, the casted article is a component of a turbine engine, for example, an airfoil, a blade or "bucket." While the molded article is discussed in certain embodiments as a component for a turbine engine, the mold and in-turn, the molded article, can be in any shape including both symmetric and irregular shapes.

The liquid metal cooling bath 54, in the illustrated embodiment of FIG. 2, includes a cooling metal with a melting point less than about 700 degree Celsius. Suitable cooling metals may include for example, aluminum, tin, lithium, magnesium, zinc, gallium, indium or a combination thereof. In a preferred embodiment, the liquid metal cooling bath may include tin as a cooling metal to remove heat from the casting metal alloy. During cooling, metals from the bath may penetrate the mold 48 and contaminate the casted article.

According to an embodiment of the invention, a metallic material or a metal contaminant is deposited on a surface of a casted article as a result of the ingression of liquid metal during a casting process. The ingression of liquid metal may occur when a mold containing the casted article cracks while the mold is still immersed in a liquid metal cooling bath. When the mold cools and develops cracks while still in the liquid metal cooling bath, the liquid metal can flow along the cracks in the mold and eventually make contact with the surface of the casted article inside the mold. The liquid metal can react with the interior of the mold while flowing through the mold cracks and with the article material while in contact with surfaces of the casted article. For this reason, some elements in the mold and in the casted article may also be present in the metal contaminant due to the interaction of the ingressed liquid metal with the mold and casted article materials.

As used herein, the "metallic material" is a material containing metal or metal alloys. The metallic material is deposited on the surface of the casted article in excess of any amount of the material which amount may be present in the casted article. In a non-limiting example, the metallic materials may include at least one element selected from the group consisting of tin, iron, cobalt, nickel, aluminum, chromium, titanium, and combinations thereof, for example stainless steel. The metallic material may further include other modifying constituents co-deposited with the metal or metal alloy, such as silicon, zirconium, yttrium, oxygen or combinations thereof.

The thickness of the metallic material deposited on the surface will depend on various factors, such as the type of the article being cast, the casting process employed, the materials being employed, and the like. In one embodiment, the metallic material may have a thickness between about 2 microns and about 2000 microns. In another embodiment, the metallic material may have a thickness between about 5 microns and about 1000 microns. In yet another embodiment, the metallic material may have a thickness between about 10 microns and about 500 microns.

The cleaning method 14 of the casted article, in the illustrated embodiment of FIG. 1, typically includes a chemical process for removing the metallic material from the surface. The chemical process includes contacting (treating) the contaminated surface containing the metallic material with an aqueous composition. Various techniques can be used to treat the casted article with the aqueous composition. For example, the casted article can be continuously sprayed with the composition, using various types of spray guns. A single or multiple spray guns could be employed. In another alternative embodiment, the aqueous composition could be poured over the casted article and continuously recirculated.

The cleaning method 14 of the article has a very desirable degree of selectivity. In other words, the metallic material can be effectively removed from the surface of the casted article, without adversely affecting or damaging the article. This is very advantageous for preserving the structural integrity and dimensions of the casted article. Moreover, the treatment composition described herein is relatively benign, from an environmental standpoint, as compared to mineral acid-based compositions.

As used herein, the term "removing the metallic material" is meant to refer to the severe degradation of the metallic material, leaving at most only a metallic material residue. The residue weakly adheres to the underlying surface. The residue can be removed by a subsequent, conventional technique such as "de-smutting," as discussed below.

In an embodiment, FIG. 3 illustrates a system 60 of treating a casted article 62 recovered from the directional solidification furnace 40 as illustrated in FIG. 1, with an aqueous composition 68. The system 60 includes a bath 70 filled with the aqueous composition 68. The casted article 62 includes portions containing a metallic material 66 present on a surface 64. The casted article 62 is immersed into the aqueous composition 68 to strip the metallic material 64 from the surface 62. Immersion in this manner, often permits the greatest degree of contact between the aqueous composition 68 and the metallic material 64 being removed. A treated article 72 is removed from the bath 70 after a predetermined time.

Immersion time and bath temperature will depend on various factors such as the type of metallic material being removed, the aqueous composition being used in the bath, and the equipment capabilities. In one embodiment, the treated article 72 is free of any residual metallic material. In another embodiment, the treated article 72 contains the residual metallic material 76 on a surface 74.

Usually, the bath 70 filled with the aqueous composition 68 is maintained at a temperature in the range of about room temperature to about 100 degrees Celsius, while the article 49 is immersed therein. In preferred embodiments, the temperature is maintained in the range of about 45 degrees Celsius to about 95 degrees Celsius. The immersion time in the bath may vary considerably. It is usually in the range of about 10 minutes to about 72 hours, and preferably, from about 1 hour to about 20 hours. Longer immersion times may compensate for lower bath temperature.

In one embodiment, the aqueous composition 68 or the treatment composition includes an acid having the formula HₓAF₆. In this formula, A is selected from the group consisting of Si, Ge, Ti, Zr, Al, and Ga. The subscript x is a quantity from 1 to 6, and more typically, from 1 to 3. Materials of this type are available commercially, or can be prepared without undue effort. The HₓAF₆ compound, sometimes referred to herein as the "primary acid", is preferably H₂SiF₆ or H₂ZrF₆, or mixtures thereof. In some embodiments, H₂SiF₆ is especially preferred. The compound H₂SiF₆ is referred to by several names, such as "fluosilicic acid," "hydrofluosilicic acid," "fluorosilicic acid," and "hexafluorosilicic acid."

Precursors to the HₓAF₆ acid may also be used. As used herein, a "precursor" refers to any compound or group of compounds that can be combined to form the acid or its dianion AF₆⁻², or which can be transformed into the acid or its dianion under reactive conditions, for example, the action of heat, agitation, catalysts, and the like. Thus, the acid can be formed in situ in a reaction vessel, for example.

As one illustration, the precursor may be a metal salt, inorganic salt, or an organic salt in which the dianion is ionically bound. Non-limiting examples include salts of Ag, Na, Ni, K, and NH₄⁺, as well as organic salts, such as a quaternary ammonium salt. Dissociation of the salts in an aqueous solution yields the acid. In the case of H₂SiF₆, a convenient salt, which can be employed, is Na₂SiF_{6.}

In one embodiment, H₂SiF₆ can be formed in situ, for example, by the reaction of a silicon-containing compound with a fluorine-containing compound. An exemplary silicon-containing compound is SiO₂, while an exemplary fluorine-containing compound is hydrofluoric acid, that is aqueous hydrogen fluoride.

When used as a single acid, the HₓAF₆ acid can be somewhat effective for removing chromide deposition. The preferred level of acid employed will depend on various factors, such as the type and amount of deposition being removed; the location of the metallic material on the article; the type of the article; the thermal history of the article and deposition, for example, the level of interdiffusion; the technique by which the article is being exposed to the treatment composition as described above; the time and temperature used for treatment; and the stability of the acid in solution.

In general, the HₓAF₆ acid is present in the treatment composition at a level in the range of about 0.05 M to about 5 M, where M represents molarity. Molarity can be readily translated into weight or volume percentages, for ease in preparing the solutions. Usually, the level is in the range of about 0.2 M to about 3.5 M. In the case of H₂SiF₆, a preferred concentration range is often in the range of about 0.2 M to about 2.2 M. Longer treatment times and/or higher treatment temperatures, described below, may compensate for lower levels of the acid, and vice versa. Adjustment of the amount of HₓAF₆ acid, and of other components described below, can readily be made by observing the effect of particular compositions on the deposition removal from the article.

In preferred embodiments, the treatment composition also includes at least one additional acid or "second acid" or precursor thereof. The additional or "second" acid is preferably a phosphorous-containing compound, or nitric acid. Non-limiting examples of the phosphorous compounds include phosphoric acid and phosphorous acid, as well as mixtures thereof. In general, the phosphorous compounds are commercially available, as is nitric acid. These compounds can also be synthesized by well-known techniques.

Those skilled in the art can select the most appropriate additional acid, based on observed effectiveness and other factors, such as availability, compatibility with the primary acid, cost, and environmental considerations. Moreover, a precursor of the acid may be used, such as a salt, as described above in reference to the primary acid. For most embodiments, the preferred additional acid is a phosphorous compound, with phosphoric acid being especially preferred.

The present inventors do not wish to be bound to any particular theory in regard to the unexpected efficacy of the phosphorous compounds and nitric acid. However, they appear to provide the acidic capacity to rapidly oxidize the metal in the metallic material. This in turn appears to induce the metallic material to become solubilized, and to readily detach from the casted article surface region.

The amount of additional acid employed, that is, the phosphorous compound or nitric acid, will depend on the acid itself, as well as the identity of the primary acid, and on many of the factors set forth above. Phosphorous compounds are usually present in the composition at a level in the range of about 0.1 M to about 20 M. In some preferred embodiments, for example, in the case of phosphoric acid, the preferred range is from about 0.5 M to about 5 M. Furthermore, some preferred embodiments contemplate a range of about 2 M to about 4 M.

When present as the additional acid, nitric acid is present at a level, which will minimize degradation of casted articles being treated according to this invention. Usually that level will be no greater than about 1.2 M. In preferred embodiments, the range will be from about 0.3 M to about 1 M.

In some embodiments, the treatment composition 68 includes a minor amount of a third acid. This constituent is usually a strong acid, having a pH of less than about 3.5 in pure water. Thus, the third acid can be nitric acid, when the second acid is a phosphorous compound. Non-limiting examples of other strong mineral acids are sulfuric acid, hydrochloric acid, hydrofluoric acid, hydrobromic acid, hydriodic acid, perchloric acid, alkyl sulfonic acids, and mixtures of any of the foregoing. The strong acid appears to be especially useful for removing portions of the metallic material, which metallic material may have diffused into the casted article.

In one embodiment, the third acid comprises hydrochloric acid, nitric acid, or mixtures thereof. In a preferred embodiment, the third acid is hydrochloric acid. Typically, the acid is advantageously supplied and used in aqueous form, for example, 35-38 percent hydrochloric acid in water.

The amount of third acid employed will depend on the identity of the primary acid and the second acid, and on many of the factors set forth above. To minimize degradation of the article, the third acid is preferably present at the levels described above, in regard to nitric acid. Thus, the concentration of the acid in the treatment composition is usually no greater than about 1.2 M, and preferably in the range of about 0.3 M to about 1 M.

The aqueous composition 68 of the present invention may further include various other additives, which additives serve a variety of functions. Non-limiting examples of these additives are inhibitors, dispersants, surfactants, chelating agents, wetting agents, deflocculants, stabilizers, anti-settling agents, reducing agents, and anti-foam agents. Those of ordinary skill in the art are familiar with specific types of such additives, and effective levels of usage. An example of an inhibitor for the composition is a relatively weak acid like acetic acid. Such a material tends to lower the activity of the primary acid in the composition. This is desirable in some instances, for example, to decrease the potential for pitting of the surfaces of some types of casted articles, if contacted with the treatment composition.

Treatment of the casted article 62 in the aqueous composition 68 severely degrades the integrity of the metallic material 66 being removed. The degraded metallic material is referred to herein as "smut" or "metallic material residue." The metallic material residue often continues to weakly adhere to an underlying layer of the casted article. Consequently, the treatment is usually followed by a post-stripping step, often referred to as a "de-smutting" operation. Such a step is known in the art, and described in various references. De-smutting may be performed in the form of a gentle abrasion step that minimizes damage to the casted article or the underlying layer. As one example, grit-blasting can be carried out by directing a pressurized air stream containing aluminum oxide particles across the article surface. The air pressure is usually less than about 100 psi. The grit-blasting is carried out for a time period sufficient to remove the degraded deposition. The duration of grit-blasting in this embodiment will depend on various factors, such as the thickness and specific composition of the smut layer; the size and type of grit media, and the like. The process is typically carried out for about 30 seconds to about 3 minutes.

Other known techniques for abrading the surface may be used in lieu of grit-blasting. For example, the article surface can be manually scrubbed with a fiber pad, such as a pad with polymeric, metallic, or ceramic fibers. Alternatively, the article surface can be polished, for example, with a flexible wheel or belt in which alumina or silicon carbide particles have been embedded. Liquid abrasive materials may alternatively be used on the wheels or belts. These alternative techniques should be controlled in a manner that maintains a contact force against the article surface that is no greater than the force used in the grit-blasting technique discussed above.

Other techniques, or combinations of techniques, can be employed in place of abrasion, to remove the degraded metallic material. Examples include laser ablation of the article surface, or tumbling of the casted article, including water tumbling. Alternatively, the degraded material could be scraped off the article surface. As still another alternative, sound waves, for example, ultrasonic waves, could be directed against the surface, causing vibrations to shake loose the degraded material. For each of these alternative techniques, those skilled in the art would be familiar with operating adjustments which are made to control the relevant force applied against the surface of the casted article, as in the case of the abrasion technique, to minimize damage to the article being preserved. The article is sometimes rinsed after this step, for example, using water or a combination of water and a wetting agent.

The treated casted article 72, in the illustrated embodiment of FIG 3, may still contain some portion of residual metallic material 76 on the surface 74. The presence of the metallic material 76 on the surface 74 means that the surface 74 is still contaminated even after the cleaning treatment and may require additional processing.

According to one embodiment of the invention, the cleaning method 14 further includes a method 26 of inspecting a cleaned casted article, as illustrated in FIG. 1. The method 26 uses a visualization reagent to assist in the detection of the presence of a metallic material on a surface by observing response of the reagent. The method involves the steps of treating the surface of the casted article with an extraction reagent, exposing the treated surface to the visualization reagent and observing a response of the visualization reagent. Reaction of the metallic material with the extraction reagent forms a compound, which responds when brought in contact with the visualization reagent.

Suitable techniques to treat the surface with the extraction reagent may include swiping the surface with the extraction reagent, pouring the extraction reagent over the surface or the like. In one embodiment, the extraction reagent includes an acid. Suitable acids as the extraction reagent may include, but not limited to, hydrochloric acid, nitric acid, sulfuric acid, phosphoric acid, acetic acid or a combination thereof.

A variety of visualization reagents can be used for the detection of the metallic material. Suitable visualization reagents may include, but not limited to, a colorimetric reagent or a chemical indicator, a fluorescent dye or an optically active material. The "optically active material" as used herein may refer to a material, which absorb, scatter or deflect light. The response is observed on exposure of the reagent to the surface of the casted article. The visualization reagent may result in a colorimetric response that is a change in color, absorbance, scatter or fluorescence response corresponding to the visualization reagent used.

In a preferred embodiment, a colorimetric reagent is used for the detection of the metallic material on the surface. Change in color may depend on the type of the metallic material present on the surface and the colorimetric reagent used for the detection. Various colorimetric reagents can be used for detecting different metals. For example, pyrocatechol violet (PV) is a sensitive reagent for colorimetric determination of tin, iron, aluminum, chromium and yttrium. Other colorimetric reagents sensitive to tin may include galleon, pyrogallol red, bromopyrogallol red, or phenylfluorone.

Pyrocatechol violet is a sulfone phthalein dye made from condensing two moles of pyrocatechol with one mole of o-sulfobenzoic acid anhydride. Pyrocatechol violet has four hydroxyl groups, two sulphone oxygens and a quinone oxygen. Chemical structure of pyrocatechol violet is as follows :

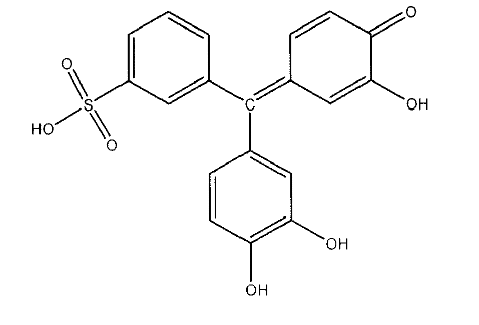

All of the functional groups are in conjugation with a delocalized aromatic system that imparts color to the compound by absorbing light in the characteristic visible wavelengths. Pyrocatechol violet has color indicator properties and forms complexes of blue to blue-violet colors with metal ions.

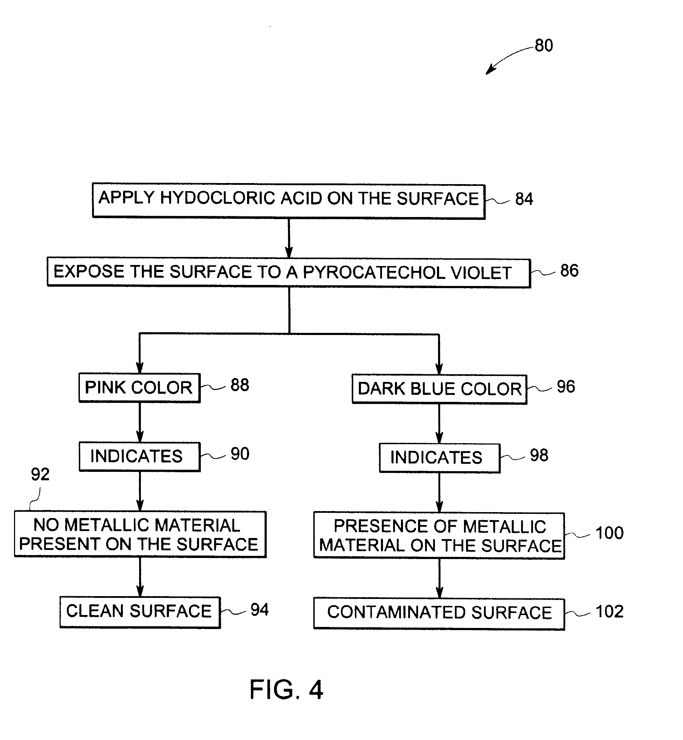

In an exemplary embodiment, a method of inspection or detection of a metallic material on a cleaned surface of a casted article by using pyrocatechol violet is illustrated in a flow chart 80 of FIG 4. The inspection method involves a step 84 of applying hydrochloric acid on the surface of the cleaned casted article. Hydrochloric acid converts any tin, iron, aluminum, chromium or yttrium present on the surface, to a corresponding chloride. Further, the inspection method involves step 86 of exposing the surface to pyrocatechol violet. In one embodiment, a pink color (block 88) is observed due to formation of protonated pyrocatechol violet. Protonation of the oxygen by the hydrochloric acid causes shift in frequency of the absorption of visible light because of an altered electronic structure. The pink color indicates (block 90) that there is no trace of the above metals on the surface as shown by step 92, and hence a clean surface (block 94). Thus, formation of the pink color ensures that the surface is free of tin after the cleaning treatment. In an alternate embodiment, a blue-violet color (block 96) shows formation of a metal-PV complex and indicates (block 98) the presence of residual metals (block 100) at some portions of the surface and thus implies a contaminated surface (block 102).

In some embodiments, the detection of a specific metal present on the surface can also be achieved by using a masking agent. The masking agent can be applied to the surface before exposing the surface to the visualization reagent. The masking agent allows the specific metal to be exposed to the visualization reagent and does not allow other metallic materials to be exposed to and react with the visualization reagent. For example, suitable masking agents that allow only tin to be inspected and mask other metals, are lactic acid and ascorbic acid. These acids selectively reduce metals except tin. Other masking agent may be N-(2-hydroxyethyl) ethylenedinitrilotriacetic acid (HEDTA) or ethylenediaminetetraacetic acid (EDTA), which selectively chelates other metals.

Various techniques can be used to expose the surface to the visualization reagent. A unit can be used to expose at least a portion of the casted article to a visualization reagent. Suitable units may include, but are not limited to, a cotton swab, a block paper, a spray, a bath, a glass rod, a glass pipe, or a cloth.

Similarly, various techniques can be used to observe the response on exposing the visualization reagent to the surface. The response of the visualization reagent may be observed with or without the use of a visualization aid. In one embodiment, the response may be observed by the human eye. In another embodiment, the visualization aid may be an optical system such as a light source, an optical detector, an optical differentiator or a combination thereof. The optical differentiator may include a filter, a prism, a spectrometer, an interferometer or the like. For example, the emission of a fluorescent dye may be observed under UV excitation.

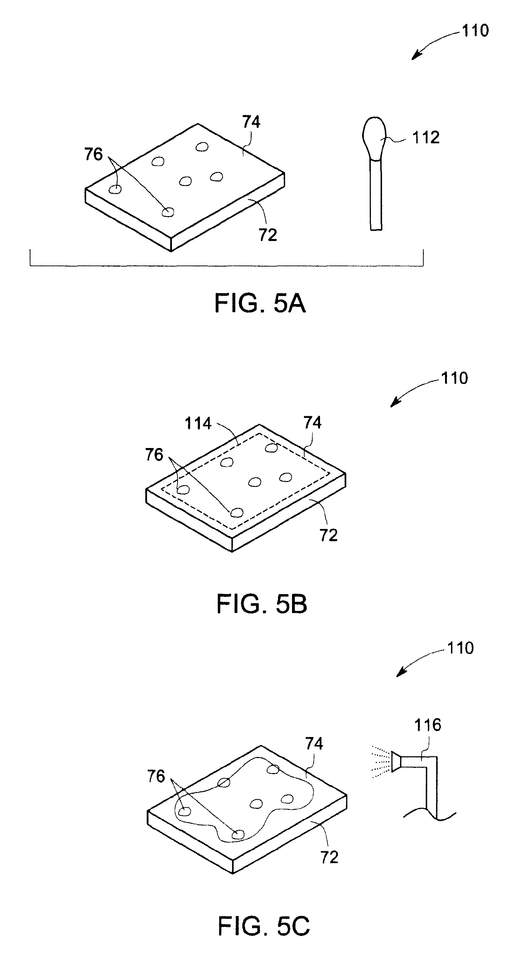

In exemplary embodiments, some preferred techniques for using a colorimetric reagent are illustrated in FIG 5A, 5B, and 5C. An article 72 is the article recovered after step 24 of the cleaning method 14 illustrated in FIG 1. In one embodiment, the surface 74 of the article 72 is free of any metallic material. Alternatively, the surface 74 may include at least a portion containing the residual metallic material 76. In one embodiment, the unit may be a cotton-tipped swab 112 as shown in FIG 5A. The swab 112 wet with the colorimetric reagent 110 is swiped over the surface 74 of the article 72 and a response is observed. In another embodiment, the unit may be a block paper 114 as shown in FIG 5B. The block paper 114 dipped into or impregnated with the colorimetric reagent 110 is pressed against the surface 74. Colors on the block paper shows corresponding cleaned or contaminated portions of the surface 74. Yet in another embodiment, the colorimetric reagent 110 is sprayed over the surface 74 by a sprayer 116 as shown in FIG 5C. A color change can be observed over the surface 74 at corresponding portions of the surface 74.

### EXAMPLES

The example that follows is merely illustrative, and should not be construed to be any sort of limitation on the scope of the claimed invention.

### Example 1

The following Example 1 illustrates a directional solidification process conducted utilizing a tin metal cooling bath. In this process, an article, for example, as turbine blade is first cast in a mold that is made from Ni based superalloy. The superalloy article comprises 7.5 weight percent cobalt, 7.0 weight percent chromium, 6.2 weight percent aluminum, 6.5 weight percent tantalum, 1.5 weight percent molybdenum, 5.0 weight percent tungsten, 3.0 weight percent rhenium, trace amounts of hafnium, yttrium, boron and carbon, with the balance being nickel. The mold and casting are lowered into a bath of molten tin at a rate of 0.5 cm/minute. The temperature of the molten tin is maintained at about 300 degree Celsius, approximately 50 degree Celsius above the melting temperature of the pure tin. The thermal gradient measured in the cast part is 98 degree C/cm.

A deposit of metal contaminant having a thickness of about 500 microns is located on the surface of the casted superalloy article. The metal contaminant is primarily comprised of tin, due to the ingression of liquid tin during the casting process. The ingression of liquid tin occurs in a liquid-tin-cooled directional solidification process when the mold containing the casted superalloy article cracks while the mold is still immersed in the liquid tin bath. As the mold cools, it develops cracks while still in the liquid tin bath. The liquid tin flows along the cracks in the mold and makes contact with the surfaces of the casted article inside the mold. The liquid tin can react with the interior of the mold while flowing through the mold cracks and with the superalloy while in contact with the casted article surface. As a result, some elements in the casting mold and in the casted article may also be present in the metal contaminant.

The contaminated casted article is immersed in a bath of an aqueous composition comprising commercially available grades of approximately 71 volume percent hydrofluosilicic acid (H₂SiF₆), 24 volume percent phosphoric acid (H₃PO₄) and 5 volume percent hydrochloric acid (HCl). The bath is maintained at a temperature of 80 degrees Celsius, while the article is immersed in the aqueous composition for 4 hours. The metal contaminant is substantially removed by the aqueous acid composition after the approximately 1-hour immersion. The treated surface of the article is inspected to detect any residual tin present on the surface. The surface is first treated with concentrated hydrochloric acid. The hydrochloric acid used is 10-volume percent acid in water. The tin present on the surface reacts with HCl to form tin chloride. A cotton swab dipped into a 10⁻³ M solution of PV is applied on the acidified surface. The swab turns pink due to formation of protonated pyrocatechol violet (PV).

### Example 2

The contaminated casted article is immersed in a bath of an aqueous composition comprising commercially available grades of approximately 71 volume percent hydrofluosilicic acid (H₂SiF₆), 24 volume percent phosphoric acid (H₃PO₄), and 5 volume percent hydrochloric acid (HCl). The bath is maintained at a temperature of 80 degrees Celsius, while the article is immersed in the aqueous composition for 4 hours. The metal contaminant is substantially removed by the aqueous acid composition after the approximately 4-hour immersion. The treated surface of the article is inspected to detect any residual tin present on the surface. The surface is first treated with concentrated hydrochloric acid. The hydrochloric acid used is 10-volume percent acid in water. Any tin present on the surface reacts with HCl to form tin chloride. A cotton swab dipped into a 10 ⁻³ M solution of PV is applied on the acidified surface. The swab turns blue-violet due to formation of tin complex with pyrocatechol violet (PV).

While only certain features of the invention have been illustrated and described herein, many modifications and changes will occur to those skilled in the art. It is, therefore, to be understood that the appended claims are intended to cover all such modifications and changes as fall within the scope of the invention.

For completeness, various aspects of the invention are now set out in the following numbered clauses:
1. A method, comprising steps of:
   forming a casted article by a liquid metal cooled directional solidification process;
   removing a metallic material from a surface of the casted article; and
   inspecting for the presence of the metallic material on the surface of the casted article
   by exposing the surface to a visualization reagent.
2. The method of clause 1, wherein removing the metallic material from the surface of the casted article, comprises a chemical process.
3. The method of clause 1, wherein the chemical process comprises contacting the metallic material with an aqueous composition which comprises an acid having the formula HₓAF₆, wherein A is silicon, germanium, titanium, zirconium, aluminum, or gallium, and x is 1-6.
4. The method of clause 3, wherein x is 1-3.
5. The method of clause 3, wherein contacting comprises immersing the casted article in a bath of the aqueous composition.
6. The method of clause 1, wherein the casted article comprises iron, cobalt, nickel, aluminum, chromium, titanium, or a combination thereof.
7. The method of clause 1, wherein the casted article comprises a superalloy material.
8. The method of clause 1, wherein the casted article is an airfoil.
9. The method of clause 1, wherein the metallic material comprises tin, iron, cobalt, nickel, aluminum, chromium, titanium or a combination thereof.
10. The method of clause 1, wherein inspecting comprises the steps of:
   applying an extraction reagent to the surface of the casted article;
   exposing the surface to the visualization reagent, and
   observing a response of the visualization reagent.
11. The method of clause 10, wherein the response of the visualization reagent results in one or more of a colorimetric response, absorbance, scatter and fluorescence.
12. The method of clause 10, wherein the extraction reagent comprises an acid selected from the group consisting of hydrochloric acid, nitric acid, sulfuric acid, phosphoric acid, acetic acid, and a combination thereof.
13. The method of clause 12, wherein acid is present at a 1 to 10% weight volume.
14. The method of clause 1, wherein the visualization reagent comprises a fluoresent dye or an optically active material.
15. The method of clause 1, wherein the visualization reagent comprises a colorimetric reagent.
16. The method of clause 15, wherein the colorimetic reagent comprises pyrocatechol violet.
17. The method of clause 16, wherein pyrocatechol violet is present in the composition range of from about 10⁻⁵ M to about 10⁻³ M.
18. The method of clause 16, wherein the color obtained by the colorimetric reagent is a dark blue color thereby indicating the presence of the metallic material on the surface.
19. The method of clause 16, wherein the color obtained by the colorimetric reagent is a pink color thereby indicating the absence of the metallic material on the surface.
20. A method, comprising:
   filling a mold with a molten metal;
   immersing the mold into a cooling metallic liquid progressively, to cause a solidification interface to pass through the molten metal;
   recovering a casted article from the mold;
   removing a metallic material from a surface of the casted article; and
   inspecting for the presence of the metallic material on the surface of the casted article by exposing the surface to a visualization reagent.
21. A system, comprising:
   a heating furnace at a temperature above the liquidus temperature of a metal within a mold;
   a liquid cooling bath comprising a cooling metallic liquid;
   a bath comprising an aqueous composition to remove a metallic material from a surface of a casted article;
   a unit to expose at least a portion of the casted article to a visualization reagent; and
   a visualization aid for observing a response of the visualization reagent.
22. The system of clause 21, wherein the unit is a cotton-tipped swab, a block paper, a sprayer, a bath, a glass pipe or a glass rod.
23. The system of clause 21, wherein the visualization aid is an optical system or human eye.
24. The system of clause 23, wherein the optical system is a light source, an optical detector, an optical differentiator or a combination thereof.

## Claims

1. A method, comprising steps of:
forming a casted article by a liquid metal cooled directional solidification process;
removing a metallic material from a surface of the casted article; and
inspecting for the presence of the metallic material on the surface of the casted article by exposing the surface to a visualization reagent.

2. The method of claim 1, wherein removing the metallic material from the surface of the casted article, comprises a chemical process.

3. The method of claim 2, wherein the chemical process comprises contacting the metallic material with an aqueous composition which comprises an acid having the formula HₓAF₆, wherein A is silicon, germanium, titanium, zirconium, aluminum, or gallium, and x is 1-6.

4. The method of claim 3, wherein x is 1-3.

5. The method of claim 3 or claim 4, wherein contacting comprises immersing the casted article in a bath of the aqueous composition.

6. The method of any preceding claim, wherein the casted article comprises iron, cobalt, nickel, aluminum, chromium, titanium, or a combination thereof.

7. The method of any preceding claim, wherein the casted article comprises a superalloy material.

8. The method of any preceding claim, wherein the casted article is an airfoil.

9. The method of any preceding claim, wherein the metallic material comprises tin, iron, cobalt, nickel, aluminum, chromium, titanium or a combination thereof.

10. The method of any preceding claim, wherein inspecting comprises the steps of:
applying an extraction reagent to the surface of the casted article;
exposing the surface to the visualization reagent, and
observing a response of the visualization reagent.

11. The method of claim 10, wherein the response of the visualization reagent results in one or more of a colorimetric response, absorbance, scatter and fluorescence.

12. The method of any preceding claim, wherein the visualization reagent comprises a colorimetric reagent, a fluoresent dye or an optically active material.

13. The method of claim 12, wherein the colorimetic reagent comprises pyrocatechol violet.

14. A method, comprising:
filling a mold with a molten metal;
immersing the mold into a cooling metallic liquid progressively, to cause a solidification interface to pass through the molten metal;
recovering a casted article from the mold;
removing a metallic material from a surface of the casted article; and
inspecting for the presence of the metallic material on the surface of the casted article by exposing the surface to a visualization reagent.

15. A system, comprising:
a heating furnace at a temperature above the liquidus temperature of a metal within a mold;
a liquid cooling bath comprising a cooling metallic liquid;
a bath comprising an aqueous composition to remove a metallic material from a surface of a casted article;
a unit to expose at least a portion of the casted article to a visualization reagent; and
a visualization aid for observing a response of the visualization reagent.
